# DEMANDE DE BREVET EUROPEEN

(11) **EP 4 819 503 A1**
(43) Date de publication de la demande: **07.10.2026**
(21) Numéro de dépôt: 26167890.8
(22) Date de dépôt: 26.03.2026
(51) Int. Cl.: H04B 5/48, G06K 19/07, H04B 5/77

(54) **PROCEDE DE DEMARRAGE D'UN DISPOSITIF NFC**

(30) Priorité: 04.04.2025 FR 2503574
(71) Demandeur: STMicroelectronics International N.V., 1228 Plan-les-Ouates, Geneva (CH)
(72) Inventeur: NONIER, Pascal, 38330 SAINT-ISMIER (FR); MERCIER, Julien, 13105 MIMET (FR)
(74) Mandataire: Cabinet Beaumont

(57) **Abrégé**

La présente description concerne un dispositif de communication en champ proche (NFC) alimenté par un champ radio fréquence (RF), le dispositif NFC comprenant :
- un circuit de contrôle du démarrage (124) configuré pour contrôler, pendant une phase de démarrage, le démarrage du dispositif NFC en réponse à la détection d'un champ RF ; et
- un circuit d'évaluation (126) configuré pour, pendant la phase de démarrage, estimer la puissance du champ RF, dans lequel le circuit de contrôle du démarrage (124) est en outre configuré pour, pendant la phase de démarrage, ajuster un niveau de limitation en tension, un niveau de fréquence et/ou un niveau d'alimentation en tension d'un ou plusieurs circuits du dispositif NFC, sur la base de la puissance du champ RF estimée, afin de modifier la durée de la phase de démarrage.

## Description

### Domaine technique

La présente description concerne de façon générale les communications en champ proche (NFC), et plus particulièrement le démarrage d'un dispositif NFC suite à la détection d'un champ radio fréquence (RF).

### Technique antérieure

La communication NFC est une technologie permettant l'échange de données sans fil entre un dispositif lecteur et un dispositif receveur, appelé en général un dispositif carte NFC. Le dispositif lecteur envoie une requête de sondage (dite de Pooling), et un dispositif carte NFC présent dans le champ répond à la requête dans le but d'établir une communication NFC.

Le dispositif carte est généralement sans batterie, et est alimenté par le champ RF. Afin de pouvoir répondre à une requête de sondage, le dispositif carte entame une phase de démarrage alimentée par de l'énergie récupérée du champ RF, par exemple sous la forme d'un courant. Le niveau, ou intensité, de ce courant dépend de la puissance du champ reçue par le dispositif carte NFC, qui elle-même dépend de la puissance du champ émis par le dispositif lecteur et de la distance séparant le dispositif carte du dispositif lecteur.

La vitesse de la phase de démarrage d'un dispositif carte NFC est reliée de façon directe à la consommation des circuits qui composent le dispositif. Configurer ces circuits pour qu'ils aient une consommation importante permet d'assurer une vitesse de démarrage élevée, mais présente un risque d'échec de démarrage en cas d'une insuffisance d'énergie fournie par le champ. A l'inverse, choisir ces circuits pour qu'ils aient une faible consommation réduit le risque d'une insuffisance du courant pendant la phase de démarrage, mais augmente la durée de la phase de démarrage, ce qui peut empêcher la mise en communication entre les dispositifs carte et lecteur NFC. En effet, afin que la réponse d'un dispositif carte NFC puisse être détectée par le dispositif lecteur et qu'une communication NFC soit établie, un délai de réponse du dispositif carte NFC doit être suffisamment faible pour ne pas dépasser le délai imposé par le dispositif lecteur qui est, par exemple, généralement de l'ordre de 5 millisecondes (valeur définie par la norme ISO14443), mais peut être inférieur dans certains cas.

### Résumé de l'invention

Il existe un besoin de rendre la requête de démarrage des dispositifs NFC régulable vis-à-vis des propriétés du champ de radio fréquence émis.

Selon un mode de réalisation, il est prévu un dispositif de communication en champ proche alimenté par un champ radio fréquence, le dispositif NFC comprenant :
- un circuit de contrôle du démarrage configuré pour contrôler, pendant une phase de démarrage, le démarrage du dispositif NFC en réponse à la détection d'un champ RF ; et
- un circuit d'évaluation configuré pour, pendant la phase de démarrage, estimer la puissance du champ RF, dans lequel le circuit de contrôle du démarrage est en outre configuré pour, pendant la phase de démarrage, ajuster un niveau de limitation en tension, un niveau de fréquence et/ou un niveau d'alimentation en tension d'un ou plusieurs circuits du dispositif NFC, sur la base de la puissance du champ RF estimée, afin de modifier la durée de la phase de démarrage.

Selon un mode de réalisation, le circuit de contrôle du démarrage est en outre configuré pour initialiser, au début de la phase de démarrage, le niveau de limitation en tension, le niveau de fréquence et/ou le niveau d'alimentation à des valeurs initiales.

Selon un mode de réalisation, le dispositif NFC comprend en outre un ou plusieurs circuits limiteurs de tension configurés pour appliquer le niveau de limitation en tension, et dans lequel le circuit de contrôle du démarrage est en configuré pour ajuster le niveau de limitation en tension en contrôlant l'un ou plusieurs circuits limiteurs de tension.

Selon un mode de réalisation, le dispositif NFC comprend en outre un générateur d'horloge comprenant un oscillateur et configuré pour générer un signal d'horloge, et dans lequel le circuit de contrôle du démarrage est configuré pour ajuster le niveau de fréquence du signal d'horloge pendant la phase de démarrage afin de modifier la durée de la phase de démarrage.

Selon un mode de réalisation, le circuit de contrôle du démarrage est configuré pour désactiver l'oscillateur pendant l'estimation de la puissance du champ RF.

Selon un mode de réalisation, le dispositif NFC comprend en outre une mémoire cadencée par le signal d'horloge.

Selon un mode de réalisation, le dispositif NFC comprend en outre un régulateur de tension configuré pour imposer la tension d'alimentation à l'un ou plusieurs circuits, le circuit de contrôle du démarrage étant configuré pour ajuster le niveau de tension d'alimentation en contrôlant le régulateur de tension afin de modifier la durée de la phase de démarrage.

Selon un mode de réalisation, le dispositif NFC comprend en outre une antenne, dans lequel le circuit de contrôle du démarrage est configuré pour modifier un facteur de qualité de l'antenne sur la base de la puissance du champ RF estimée.

Un autre mode de réalisation de la présente description prévoit un système de communication NFC comprenant :
- le dispositif NFC ci-dessus ; et
- un dispositif lecteur configuré pour émettre le champ RF.

Un autre mode de réalisation de la présente description prévoit un procédé de démarrage d'un dispositif de communication en champ proche alimenté par un champ radio fréquence, le procédé comprenant :
- contrôler, par un circuit de contrôle du démarrage du dispositif NFC pendant une phase de démarrage, le démarrage du dispositif NFC en réponse à la détection d'un champ RF;
- estimer, par un circuit d'évaluation pendant la phase de démarrage, la puissance du champ RF ; et
- ajuster, par le circuit de contrôle du démarrage pendant la phase de démarrage, un niveau de limitation en tension, un niveau de fréquence et/ou un niveau d'alimentation d'un ou plusieurs circuits du dispositif NFC sur la base de la puissance du champ RF estimée, afin de modifier la durée de la phase de démarrage.

Selon un mode de réalisation, le procédé comprend en outre l'initialisation, par le circuit de contrôle du démarrage au début de la phase de démarrage, le niveau de limitation en tension, le niveau de fréquence et/ou d'alimentation, à des valeurs initiales.

Selon un mode de réalisation, le procédé comprend en outre un ou plusieurs circuits limiteurs de tension configurés pour appliquer le niveau de limitation en tension

Selon un mode de réalisation, le procédé comprend en outre :
- la génération, par un générateur d'horloge comprenant un oscillateur, d'un signal d'horloge ; et
- l'ajustement, par le circuit de contrôle du démarrage, du niveau de fréquence du signal d'horloge pendant la phase de démarrage afin de modifier la durée de la phase de démarrage.

Selon un mode de réalisation, le procédé comprend en outre la désactivation, par le circuit de contrôle du démarrage, de l'oscillateur pendant l'estimation de la puissance du champ RF.

Selon un mode de réalisation, le procédé comprend en outre la modification, par le circuit de contrôle du démarrage, d'un facteur de qualité d'une antenne du dispositif NFC sur la base de la puissance du champ RF estimée.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 représente, de façon schématique, un système de communication NFC comprenant un dispositif lecteur NFC et un dispositif carte NFC selon un mode de réalisation de la précédente demande ;
la figure 2 est un organigramme illustrant un procédé de démarrage du dispositif carte NFC de la figure 1 selon un mode de réalisation de la présente demande ;
la figure 3 est un organigramme illustrant des étapes de la figure 2 plus en détail ; et
la figure 4 est un organigramme illustrant, dans le détail, les étapes du procédé des figures 2 et 3.

### Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés.

Sauf précision contraire, lorsque l'on fait référence à deux éléments connectés entre eux, cela signifie directement connectés sans éléments intermédiaires autres que des conducteurs, et lorsque l'on fait référence à deux éléments reliés (en anglais « coupled ») entre eux, cela signifie que ces deux éléments peuvent être connectés ou être reliés par l'intermédiaire d'un ou plusieurs autres éléments.

Dans la description qui suit, lorsque l'on fait référence à des qualificatifs de position absolue, tels que les termes « avant », « arrière », « haut », « bas », « gauche », « droite », etc., ou relative, tels que les termes « dessus », « dessous », « supérieur », « inférieur », etc., ou à des qualificatifs d'orientation, tels que les termes « horizontal », « vertical », etc., il est fait référence, sauf précision contraire, à l'orientation des figures.

Sauf précision contraire, les expressions « environ », « approximativement », « sensiblement », et « de l'ordre de » signifient à 10 % ou à 10° près, de préférence à 5 % ou à 5° près.

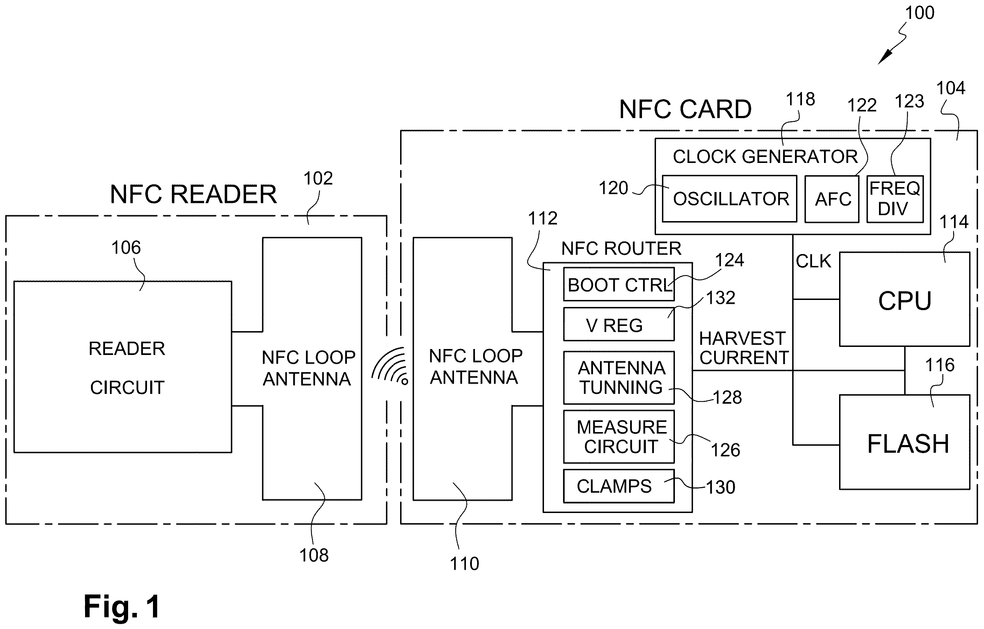

La figure 1 représente, de façon schématique, un dispositif lecteur NFC 102 (NFC READER) et un dispositif carte NFC 104 (NFC CARD) selon un mode de réalisation de la précédente demande.

Le dispositif lecteur 102 comprend un circuit lecteur 106 (READER CIRCUIT) et une antenne en boucle 108 (NFC LOOP ANTENNA).

Le dispositif carte NFC 104 est par exemple une carte sans contact alimentée au moins partiellement, et dans certains cas entièrement, par de l'énergie récupérée du champ RF émis par le dispositif lecteur 102. Dans certains cas, le dispositif carte NFC 104 ne comprend pas de batterie alimentant ses circuits. Le dispositif carte NFC 104 est par exemple compatible avec la norme ISO14443 et/ou la norme ISO18092.

Le dispositif carte NFC 104 comprend par exemple une antenne en boucle 110 (NFC LOOP ANTENNA) fournissant un signal à un circuit de routage 112 (NFC ROUTER).

Le circuit de routage 112 est par exemple configuré pour extraire un courant (HARVEST CURRENT) induit par le champ et pour fournir ce courant à un processeur 114 (CPU) et une mémoire 116 (FLASH). Le processeur 114 est une unité centrale de traitement (en anglais « Central Processing Unit »). Le processeur 114 est par exemple cadencé par un signal d'horloge CLK généré par un générateur d'horloge 118 (CLOCK GENERATOR) comprenant par exemple un oscillateur 120 (OSCILLATOR), un circuit d'ajustement automatique de fréquence 122 (AFC) et un diviseur de fréquence 123 (FREQ DIV).

La mémoire 116 est par exemple une mémoire non volatile, telle qu'une mémoire de type FLASH.

L'oscillateur 120 est par exemple configuré pour générer un signal à une première fréquence, par exemple à 60 MHz.

Le diviseur de fréquence est par exemple configuré pour sélectivement diviser la fréquence du signal généré par l'oscillateur 120. Par exemple, pour un signal de l'oscillateur à 60 MHz, le diviseur de fréquence 123 est capable de générer un signal avec une fréquence de 60 MHz, 30 MHz ou de 15 MHz en appliquant un factor de division de 1, de 2 ou de 4.

Le circuit de routage 112 comprend par exemple un circuit de contrôle du démarrage 124 (BOOT CTRL) configuré pour contrôler une phase de démarrage du dispositif carte NFC 104 en réponse à la détection d'un champ RF émis par le dispositif lecteur NFC 102 par l'intermédiaire de l'antenne 110 du dispositif carte NFC 104. Le circuit de contrôle du démarrage 124 est par exemple mis en œuvre par une machine à états finis. Le circuit de routage 112 comprend en outre, par exemple, un circuit d'évaluation 126 (MEASURE CIRCUIT) configuré pour, pendant la phase de démarrage, évaluer la puissance du champ RF reçue par l'intermédiaire de l'antenne 110. Le circuit de routage 112 comprend en outre, par exemple, un circuit de régulation d'antenne 128 (ANTENNA TUNNING) configuré pour réguler des paramètres de l'antenne 110. Le circuit de routage 112 comprend en outre, par exemple, un ou plusieurs circuits limiteurs de tension 130 (CLAMPS) configurés pour limiter la tension du signal électronique récupérée du champ afin d'éviter des surtensions en cas de champ RF important qui pourraient endommager les circuits du dispositif carte NFC 104. Le circuit de routage 112 comprend en outre, par exemple, un régulateur de tension 132 (V REG) configuré pour générer une tension d'alimentation d'un ou plusieurs circuits du dispositif carte NFC 104. Par exemple, le régulateur de tension 132 impose une tension sur le conducteur fournissant le courant récupéré du champ vers le processeur 114 et la mémoire 116.

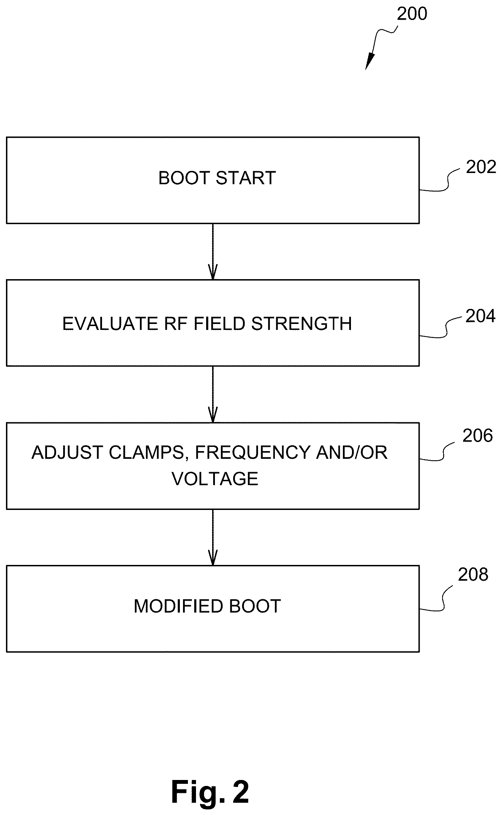

La figure 2 est un organigramme illustrant un procédé de démarrage 200 du dispositif carte NFC 104 de la figure 1 selon un mode de réalisation de la présente demande. En particulier, la figure 2 représente un exemple du procédé de contrôle du démarrage mis en œuvre par le circuit de contrôle du démarrage 124 de la figure 1.

Dans une étape 202 (BOOT START), le circuit de contrôle du démarrage 124 est configuré pour initialiser une phase de démarrage du dispositif carte NFC 104. Par exemple, le générateur d'horloge 118 initialise la fréquence du signal d'horloge généré par l'oscillateur 120 à un niveau relativement bas, tel qu'à 15 MHz.

Dans une étape 204 (EVALUATE RF FIELD STRENGTH), le circuit de contrôle du démarrage 124 est configuré pour évaluer la puissance du champ RF captée par l'antenne 110 du dispositif carte NFC 104. Par exemple, le circuit de contrôle du démarrage 124 est configuré pour détecter un niveau de courant électrique ou de tension électrique récupéré du champ RF par l'intermédiate de l'antenne 110.

Dans une étape 206 (ADJUST CLAMPS, FREQUENCY AND/OR VOLTAGE), le circuit de contrôle du démarrage 124 est configuré pour ajuster un niveau de limitation en tension, une fréquence de fonctionnement et/ou une tension d'alimentation d'un ou plusieurs circuits du dispositif carte NFC 104 sur la base de la puissance du champ RF détectée et afin de modifier la durée de démarrage du dispositif carte NFC 104. Par exemple, dans le cas où la puissance détectée du champ RF est relativement importante, le circuit de contrôle du démarrage 124 est configuré pour sélectionner le niveau de limitation en tension, la fréquence de fonctionnement et/ou la tension d'alimentation d'un ou plusieurs circuits du dispositif carte NFC 104 de façon à viser un temps de démarrage relativement faible, par exemple inférieur à 3 ms, et par exemple inférieur à 2 ms. Au contraire, dans le cas où la puissance détectée du champ RF est relativement faible, le circuit de contrôle du démarrage 124 est configuré pour sélectionner le niveau de limitation en tension, la fréquence de fonctionnement et/ou la tension d'alimentation d'un ou plusieurs circuits du dispositif carte NFC 104 de façon à viser un temps de démarrage relativement important, par exemple supérieur à 3 ms, et par exemple supérieur à 4 ms.

Dans une étape 208 (MODIFIED BOOT), le circuit de contrôle du démarrage 124 est configuré pour poursuivre la phase de démarrage du dispositif carte NFC 104 en utilisant les niveaux sélectionnés dans l'étape 206 afin de modifier la durée de la phase de démarrage.

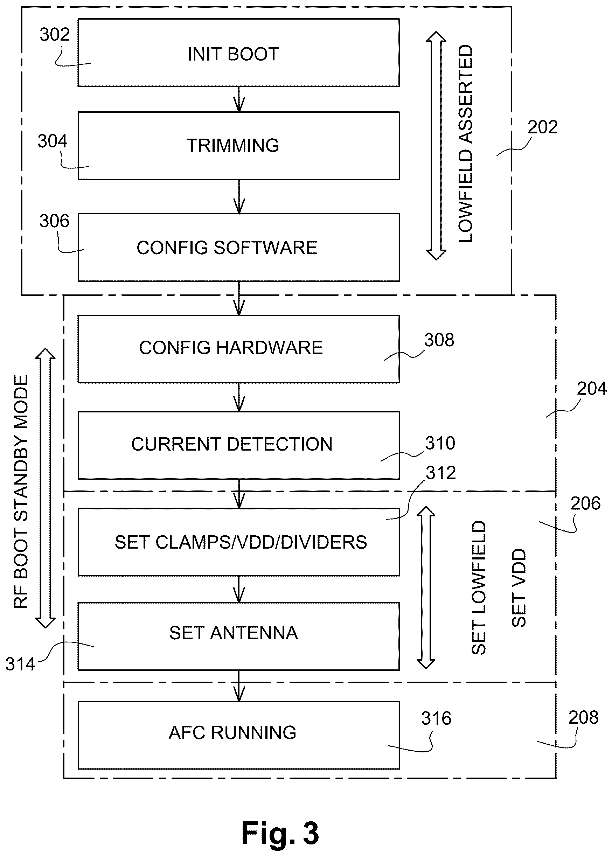

La figure 3 est un organigramme illustrant des étapes de la figure 2 plus en détail.

L'étape 202 de la figure 2 comprend par exemple des étapes 302, 304 et 306.

Dans l'étape 302 (INIT BOOT), le circuit de contrôle du démarrage 124 est configuré pour fixer les paramètres de démarrage système, tel que la fréquence du signal d'horloge CLK générée par le générateur d'horloge 118, et/ou un ratio de modulation appliqué au signal généré par l'oscillateur 120 ou par le diviseur de fréquence 123. En particulier, dans certains cas, le générateur d'horloge 118 comprend un circuit de modulation (non illustré) configuré pour moduler la fréquence du signal généré par l'oscillateur 120 sur la base du ratio de modulation fixé par le circuit de contrôle du démarrage 124. Dans certains cas, le ratio de modulation est représenté en forme de pourcentage de la fréquence de l'oscillateur 120, avec une granularité de, par exemple, 5%. Dans l'étape 302, les paramètres de démarrage sont par exemple sélectionnés afin d'assurer une faible consommation du dispositif carte NFC 104 pendant une première partie de la phase de démarrage, par exemple pendant les étapes 302, 304 et 306. Par exemple, comme indiqué par la référence « LOW FIELD ASSERTED », un paramètre de champ faible est par exemple activé, impliquant que les paramètres de démarrage soient ceux choisis pour convenir à un champ de faible puissance et un mode de faible consommation du dispositif carte NFC 104 est donc sélectionné.

Dans l'étape 304 (TRIMMING), le circuit de contrôle du démarrage 124 est configuré pour calibrer un ou plusieurs composants internes du dispositif carte NFC 104, par exemple le processeur 114 et/ou le circuit de routage 112, sur la base de paramètres de calibration stockés dans la mémoire 116. Par exemple, ces paramètres de calibration sont chargés dans un ou plusieurs registres et sont utilisés pour effectuer des réglages des composants, tels que fixer des niveaux de tension d'alimentation, des tensions de polarisation des transistors, etc.

Dans l'étape 306 (CONFIG SOFTWARE), le circuit de contrôle du démarrage 124 est par exemple configuré pour récupérer de la mémoire 116 une configuration de certains circuits, tel que le circuit de régulation d'antenne 128 et/ou le circuit le circuit d'ajustement automatique de fréquence AFC 122, afin de préparer l'utilisation de ces circuits dans les étapes suivantes.

L'étape 204 de la figure 2 comprend par exemple des étapes 308 et 310.

Dans l'étape 308 (CONFIG HARDWARE), le circuit de contrôle du démarrage 124 est par exemple configuré pour initialiser le circuit d'évaluation 126. Par exemple, le circuit d'évaluation 126 comprend un ou plusieurs circuits analogiques, qui sont mis sous tension pendant cette étape. De plus, le circuit de contrôle du démarrage 124 est par exemple configuré pour placer le dispositif carte NFC 104 dans un état de faible consommation, afin de limiter des bruits pendant l'évaluation de la puissance du champ. Par exemple, le processeur 114 et/ou le générateur d'horloge 118 sont désactivés. Dans le cas où le générateur d'horloge 118 est désactivé, le circuit de contrôle du démarrage 124 est par exemple cadencé par un signal d'horloge extrait du champ RF reçu, qui est par exemple à une fréquence de 13,56 MHz.

Dans une étape 310 (CURRENT DETECTION AND CLAMP SETTING), le circuit d'évaluation 126 est configuré, pendant la phase de démarrage et par exemple lorsque le dispositif carte NFC 104 est en mode faible consommation, pour évaluer la puissance reçue du champ RF. Par exemple, la puissance du champ est évaluée en mesurant le niveau du courant électrique récupéré par l'intermédiaire de l'antenne 110. Par exemple, le circuit de routage 112 comprend un ou plusieurs circuits (non illustrés) configurés pour transformer un signal électrique à courant alternatif (AC) reçu par l'antenne 110 en un courant continu (DC), et le circuit d'évaluation 126 est configuré pour évaluer un niveau de ce courant continu. Dans certains cas, le circuit de routage 112 comprend également un régulateur en tension (non illustré) configuré pour fournir au processeur 114 et à la mémoire 116 une tension d'alimentation stable sur la base du courant continu généré.

Dans certains cas, l'évaluation de la puissance du champ est effectuée en activant, l'un après l'autre, les circuits limiteurs de tension 130, en commençant par le circuit limiteur ayant la tension la plus importante et allant vers le circuit limiteur ayant la tension la plus faible. Chaque circuit limiteur de tension 130 est configuré pour imposer une tension de niveau correspondant, par exemple à 4,2 V, 3,1 V, 2,6 V et 2,3 V. Par exemple, le circuit de contrôle du démarrage 124 est configuré pour initialiser les circuits limiteurs de tension 130 à une tension égale à 4,2 V, pour mesurer le niveau du courant électrique récupéré, et pour comparer ce niveau avec un premier seuil. Si le courant mesuré est égal ou supérieur au premier seuil, le circuit de contrôle du démarrage 124 est par exemple configuré pour garder la sélection de la tension de limitation à 4,2 V, et de passer à une étape suivante 312. Si au contraire le courant mesuré est inférieur au premier seuil, le circuit de contrôle du démarrage 124 est par exemple configuré pour diminuer d'un cran la tension des circuits limiteurs de tension 130, par exemple au niveau de 3,1 V, pour mesurer le niveau du courant électrique récupéré, pour comparer ce niveau avec un deuxième seuil inférieur au premier seuil, et selon la comparaison, pour garder la tension de limitation à 3,1 V ou de diminuer d'un cran la tension des circuits limiteurs de tension 130. Le circuit de contrôle du démarrage 124 réitère ce processus jusqu'à obtenir la configuration des circuits limiteurs de tension 130 qui évite des surtensions ou surintensités de courant qui peuvent endommager des circuits du dispositif carte NFC 104, tout en sélectionnant une tension de limitation plus faible afin de réduire des pertes et augmenter l'énergie récupérée du champ.

Dans une étape 312 (SET CLAMP/VDD/DIVIDERS), le circuit de contrôle du démarrage 124 est configuré pour ajuster le niveau de limitation en tension, le niveau de fréquence et/ou le niveau de la tension d'alimentation d'un ou plusieurs circuits du dispositif carte NFC 104, par exemple du processeur 114 et/ou de la mémoire 116, sur la base de la puissance estimée du champ reçu.

Par exemple, le circuit de contrôle du démarrage 124 détermine un paramètre RAC (en anglais « RF Available Current ») en forme d'une combinaison d'états binaires définissant plusieurs niveaux de consommation possibles du dispositif carte NFC 104. Par exemple, le paramètre RAC peut prendre quatre valeurs parmi : « 00 », « 01 », « 10 », « 11 ».

Par exemple, le circuit de contrôle du démarrage 124 est configuré pour imposer une tension d'alimentation d'un ou plusieurs circuits du dispositif carte NFC 104, par exemple en contrôlant le régulateur de tension 132. Selon un exemple, la tension imposée est égale à 0.9 V si la valeur du paramètre RAC est de « 00 », est égale à 1 V si la valeur du paramètre RAC est de « 01 », est égale à 1.1 V si la valeur du paramètre RAC est de « 10 » et est égale à 1.2 V si la valeur du paramètre RAC est de « 11 ».

De plus, le circuit de contrôle du démarrage 124 est par exemple configuré pour sélectionner le niveau de limitation de tension appliqué par l'un ou plusieurs circuits de limitation de tension 130, sur la base du paramètre RAC. Par exemple, la tension imposée par le circuit limiteur pour une valeur de RAC de « 00 » est de 2,3 V, la tension imposée par le circuit limiteur pour une valeur de RAC de « 01 » est de 2,6 V, la tension imposée par le circuit limiteur pour une valeur de RAC de « 10 » est de 3,2 V et la tension imposée par le circuit limiteur pour une valeur de RAC de « 11 » est de 4,2 V.

De plus, le diviseur de fréquence 130 est par exemple configuré pour sélectionner le niveau de division sur la base de la valeur du paramètre RAC. Par exemple, dans le cas où l'oscillateur 120 génère un signal à une fréquence de 60 MHz, une valeur de RAC « 00 » est associée à une division de la fréquence du signal d'horloge par 4, et donc génère une fréquence de 15 MHz, une valeur de RAC « 01 » est associée à une division de la fréquence du signal d'horloge par 2, et donc génère une fréquence de 30 MHz, une valeur de RAC « 10 » ou « 11 » n'est pas associée à une division de la fréquence du signal d'horloge, et donc conserve une fréquence de 60 MHz.

De plus, le paramètre de champ faible est par exemple fixé (SET LOWFIELD) à un niveau d'activation, par exemple à « 1 », pour une valeur de RAC de « 00 », impliquant par exemple la configuration du dispositif carte NFC en mode basse consommation. Le paramètre de champ faible est par exemple fixé à un niveau de désactivation, par exemple à « 0 », pour une valeur de RAC autre que « 00 », impliquant par exemple la configuration du dispositif carte NFC en mode de consommation normale.

Dans l'étape 312, le circuit de contrôle du démarrage 124 est également configuré, par exemple, pour fixer des paramètres de la mémoire non volatile 116 et/ou le régulateur en tension du circuit de routage NFC, selon la puissance du champ estimée.

Dans une étape 314 (SET ANTENNA), le circuit de régulation d'antenne 128 est configuré pour améliorer un ou plusieurs paramètres de transmission de l'antenne 110, par exemple en diminuant ou augmentant son facteur de qualité. En effet, lorsque la puissance du champ estimée est supérieure aux capacités du dispositif de carte NFC 104, le circuit de contrôle du démarrage 124 est configuré pour contrôler le facteur de qualité afin de dissiper ce surplus d'énergie. A l'inverse, lorsque la puissance du champ estimée est faible, il convient d'augmenter le facteur de qualité de l'antenne 110 pour augmenter l'énergie récupérée du champ.

Pendant les étapes 308, 310, 312 et 314, le circuit de contrôle du démarrage 124 est par exemple configuré pour placer le dispositif carte NFC 104 dans un mode de mise en veille de la phase de démarrage RF (RF BOOT STANDBY MODE).

Dans une étape 316 (AFC RUNNING), le circuit de contrôle du démarrage 124 est par exemple configuré pour poursuivre la phase de démarrage du dispositif carte NFC 104, et pour générer une réponse à la requête de sondage. En particulier, le circuit de contrôle du démarrage 124 est par exemple configuré pour sortir le dispositif carte NFC 104 du mode à faible consommation, par exemple en activant à nouveau le processeur 114, le générateur d'horloge 118 ainsi que le circuit d'ajustement automatique de fréquence 122. Le démarrage du dispositif carte NFC 104 poursuit avec des paramètres sélectionnés comme indiqué ci-dessus, afin de réduire le temps de démarrage en fonction de la puissance du champ estimé, permettant ainsi de réduire le temps de démarrage dans le cas où la puissance du champ le permet.

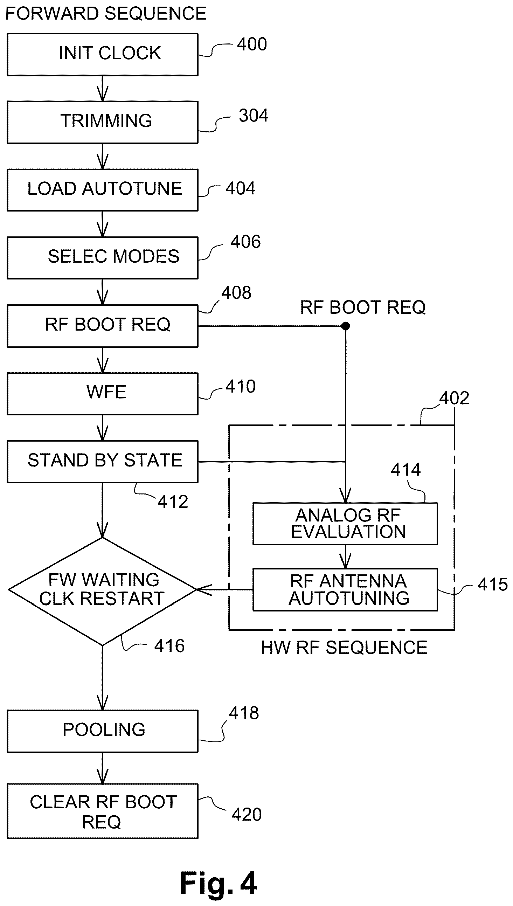

La figure 4 est un organigramme illustrant, dans le détail, les étapes du procédé des figures 2 et 3. Plus particulièrement, la figure 4 illustre dans le détail une séquence principale 400 (FORWARD SEQUENCE) réalisée par exemple lorsque le processeur 114 est activé, ainsi qu'une séquence RF matériel 402 (HW RF SEQUENCE) réalisée lorsque le processeur 114 est désactivé, et est par exemple en mode veille.

Dans une étape 400 (INIT CLOCK), le générateur d'horloge 118 est par exemple configuré pour initialiser le diviseur de fréquence 123 avec un facteur de division égal à 4, et donc une fréquence de 15 MHz si l'oscillateur 120 fonctionne à 60 MHz. De plus, le ratio de modulation est par exemple fixé par le générateur d'horloge 118 à 7,5%, ce qui produit un signal d'horloge à une fréquence égale à 1,125 MHz. Il s'agit d'une action de génération de signal d'horloge réalisée au cours de l'étape 302 d'initialisation du circuit de contrôle du démarrage 124, comme indiqué lors de la description de la figure 3.

Après l'étape 400, l'étape 304 (TRIMMING) est par exemple réalisée comme décrit en relation avec la figure 3. Lors de cette étape, le circuit de contrôle du démarrage 124 est configuré pour calibrer un ou plusieurs composants internes du dispositif carte NFC 104, par exemple le processeur 114 ou le circuit de routage 112, sur la base de paramètres de calibration stockés dans la mémoire 116.

Dans une étape 404 (LOAD AUTOTUNE) après l'étape 304, les opérations de l'étape 306 de la figure 3 sont par exemple réalisées, et dans certains cas le circuit de contrôle du démarrage 124 est configuré pour effectuer une adaptation totale ou partielle de l'accord de l'antenne 110 suivant sa taille.

Dans une étape 406 (SELEC MODES) après l'étape 404, le dispositif de contrôle du démarrage 124 est par exemple configuré pour sélectionner un des modes de fonctionnement du dispositif carte NFC 104, c'est à dire avec un contact entre le dispositif lecteur 102 et le dispositif carte NFC 104, ou sans. Le circuit de contrôle du démarrage 124 est par exemple configuré pour enregistrer un ou plusieurs paramètres RF, ainsi que le paramètre RAC et les valeurs de tension des circuits limiteurs de tension, comme indiqué à l'étape 310 de la figure 3, au sein de la mémoire 116.

Dans une étape 408 (RF BOOT REQ), après l'étape 406, une commande RF BOOT REQ est activée, par exemple à la valeur « 1 ».

Après l'étape 408, le procédé se poursuit par le lancement de la séquence RF matériel 402 et par une étape 410 (WFE), dans laquelle le processeur 114 est configuré pour attendre un évènement (en anglais « WAIT FOR EVENT » ou « WFE »), puis entrer dans un mode veille dans une étape 412 (STANDBY STATE).

La séquence 402 comprend une étape d'évaluation du champ Rf 414 (ANALOG RF EVALUATION) sur la base de mesures provenant de circuits analogiques, qui comprend l'étape 310 de la figure 3. Elle comprend en outre une étape de calibrage des paramètres de l'antenne (RF ANTENNA AUTOTUNNING) 415 qui comprend l'étape 314 de la figure 3.

Dans une étape 416 (FW WAITING CLK RESTART) après l'étape 415, le circuit de contrôle du démarrage 124 est par exemple configuré pour commander une étape de temporisation en l'attente de la réalisation de la séquence 402 et de l'étape 412.

Dans une étape 418 (POOLING), le circuit de contrôle du démarrage 124 est par exemple configuré pour poursuivre la phase de démarrage, et la génération d'une réponse à la requête de sondage du dispositif lecteur NFC 102, avec les paramètres régulés par les actions précédentes.

Dans une étape 420 (CLEAR RF BOOT REQ) après l'étape 418, le circuit de contrôle du démarrage 124 est par exemple configuré pour effacer la valeur du paramètre RF BOOT REQ assignée lors de l'étape 408.

Un avantage des modes de réalisation décrits est qu'il est possible d'ajuster le délai de démarrage d'un dispositif carte NFC en fonction de la puissance de champ détectée, et ainsi réduire le temps de réponse à une requête de sondage.

Divers modes de réalisation et variantes ont été décrits. La personne du métier comprendra que certaines caractéristiques de ces divers modes de réalisation et variantes pourraient être combinées, et d'autres variantes apparaîtront à la personne du métier. En particulier, bien que des modes de réalisation aient été décrits basés sur une carte NFC, de façon plus générale, les principes décrits pourraient être appliqués à tout dispositif NFC alimenté par un champ RF.

Enfin, la mise en œuvre pratique des modes de réalisation et variantes décrits est à la portée de la personne du métier à partir des indications fonctionnelles données ci-dessus.

## Revendications

1. Dispositif de communication en champ proche (NFC) alimenté par un champ radio fréquence (RF), le dispositif NFC comprenant :
- un circuit de contrôle du démarrage (124) configuré pour contrôler, pendant une phase de démarrage, le démarrage du dispositif NFC en réponse à la détection d'un champ RF ; et
- un circuit d'évaluation (126) configuré pour, pendant la phase de démarrage, estimer la puissance du champ RF, dans lequel le circuit de contrôle du démarrage (124) est en outre configuré pour, pendant la phase de démarrage, ajuster un niveau de limitation en tension, un niveau de fréquence et/ou un niveau d'alimentation en tension d'un ou plusieurs circuits du dispositif NFC, sur la base de la puissance du champ RF estimée, afin de modifier la durée de la phase de démarrage.

2. Dispositif NFC selon la revendication 1, dans lequel le circuit de contrôle du démarrage (124) est en outre configuré pour initialiser, au début de la phase de démarrage, le niveau de limitation en tension, le niveau de fréquence et/ou le niveau d'alimentation à des valeurs initiales.

3. Dispositif NFC selon la revendication 1 ou 2, comprenant en outre un ou plusieurs circuits limiteurs de tension (130) configurés pour appliquer le niveau de limitation en tension, et dans lequel le circuit de contrôle du démarrage (124) est en configuré pour ajuster le niveau de limitation en tension en contrôlant l'un ou plusieurs circuits limiteurs de tension (130).

4. Dispositif NFC selon l'une quelconque des revendications 1 à 3, comprenant en outre un générateur d'horloge (118) comprenant un oscillateur (120) et configuré pour générer un signal d'horloge (CLK), et dans lequel le circuit de contrôle du démarrage (124) est configuré pour ajuster le niveau de fréquence du signal d'horloge pendant la phase de démarrage afin de modifier la durée de la phase de démarrage.

5. Dispositif NFC selon la revendication 4, dans lequel le circuit de contrôle du démarrage (124) est configuré pour désactiver l'oscillateur (120) pendant l'estimation de la puissance du champ RF.

6. Dispositif NFC selon la revendication 4 ou 5, comprenant en outre une mémoire (116) cadencée par le signal d'horloge (CLK).

7. Dispositif NFC selon l'une quelconques des revendications 1 à 6, comprenant en outre un régulateur de tension (132) configuré pour imposer la tension d'alimentation à l'un ou plusieurs circuits, dans lequel le circuit de contrôle du démarrage (124) est configuré pour ajuster le niveau de tension d'alimentation en contrôlant le régulateur de tension (132) afin de modifier la durée de la phase de démarrage.

8. Dispositif NFC selon l'une quelconque des revendications 1 à 7, comprenant en outre une antenne (110), dans lequel le circuit de contrôle du démarrage (124) est configuré pour augmenter un facteur de qualité de l'antenne si la puissance du champ RF estimée est inférieure à un seuil, et pour diminuer le facteur de qualité de l'antenne si la puissance du champ RF estimée est supérieure au seuil.

9. Système de communication NFC comprenant :
- le dispositif NFC selon l'une quelconque des revendications 1 à 8 ; et
- un dispositif lecteur (102) configuré pour émettre le champ RF.

10. Procédé de démarrage d'un dispositif de communication en champ proche (NFC) alimenté par un champ radio fréquence (RF), le procédé comprenant :
- contrôler, par un circuit de contrôle du démarrage (BOOT CTRL) du dispositif NFC pendant une phase de démarrage, le démarrage du dispositif NFC en réponse à la détection d'un champ RF;
- estimer, par un circuit d'évaluation (126) pendant la phase de démarrage, la puissance du champ RF ; et
- ajuster, par le circuit de contrôle du démarrage (124) pendant la phase de démarrage, un niveau de limitation en tension, un niveau de fréquence et/ou un niveau d'alimentation d'un ou plusieurs circuits du dispositif NFC sur la base de la puissance du champ RF estimée, afin de modifier la durée de la phase de démarrage.

11. Procédé selon la revendication 10, comprenant en outre l'initialisation, par le circuit de contrôle du démarrage (124) au début de la phase de démarrage, le niveau de limitation en tension, le niveau de fréquence et/ou d'alimentation, à des valeurs initiales.

12. Procédé selon la revendication 10 ou 11, dans lequel le dispositif NFC comprend en outre un ou plusieurs circuits limiteurs de tension (130) configurés pour appliquer le niveau de limitation en tension

13. Procédé selon l'une quelconque des revendications 10 à 12, comprenant en outre :
- la génération, par un générateur d'horloge (118) comprenant un oscillateur (120), d'un signal d'horloge (CLK) ; et
- l'ajustement, par le circuit de contrôle du démarrage (124), du niveau de fréquence du signal d'horloge pendant la phase de démarrage afin de modifier la durée de la phase de démarrage.

14. Procédé selon la revendication 13, comprenant en outre la désactivation, par le circuit de contrôle du démarrage (124), de l'oscillateur (120) pendant l'estimation de la puissance du champ RF.

15. Procédé selon l'une quelconque des revendications 10 à 14, comprenant en outre l'augmentation, par le circuit de contrôle du démarrage (124), d'un facteur de qualité d'une antenne (110) du dispositif NFC si la puissance du champ RF estimée est inférieure à un seuil, et pour diminuer le facteur de qualité de l'antenne si la puissance du champ RF estimée est supérieure au seuil.
